# EUROPEAN PATENT SPECIFICATION

(11) **EP 4 025 759 B1**
(45) Date of publication and mention of the grant of the patent: **03.04.2024**
(21) Application number: 20789263.9
(22) Date of filing: 23.09.2020
(51) Int. Cl.: E06B 9/266, B29C 65/48, B29C 65/00, B29D 16/00

(54) **MACHINE FOR THE PRODUCTION OF COUPLED PLEATED FABRICS AND PRODUCT THUS OBTAINED**
MASCHINE FÜR DIE PRODUKTION GEKOPPELTER GEFALTETER GEWEBE UND SO ERHALTENES PRODUKT
MACHINE POUR LA PRODUCTION DE TISSUS PLISSÉS ACCOUPLÉS ET PRODUIT AINSI OBTENU

(30) Priority: 28.10.2019 IT 201900019850
(43) Date of publication of application: 13.07.2022
(73) Proprietor: DFM S.r.l., 00015 Monterotondo (RM) (IT)
(72) Inventor: SERGIO, Marcantoni, 00015 Monterotondo (Roma) (IT)
(74) Representative: Fiammenghi, Eva
(86) International application number: PCT/IB2020/058876
(87) International publication number: WO 2021/084337

(56) References cited:
- EP-A1- 0 482 793
- EP-A2- 0 227 247
- WO-A1-94/29559
- JP-U- S55 125 822
- US-A- 3 887 418

## Description

### Field of the art

The present invention generally relates to the curtains industry and in particular to curtains of the pleated type consisting of more than one layer. Specifically, the present invention relates to a motor-driven machine that allows the stable and irreversible coupling of at least two fabrics, following the respective pleats.

### Prior art

Although pleated curtains have been known for some time, the industrial sector of the production of the latter hardly undergoes technological innovations. Thus, not only is the supply on the market of pleated curtains of various types scarce, but their production is still linked to numerous manual handicraft processes, which increase production costs and times. Even less widespread are pleated curtains consisting of more than one layer in which the various fabrics are coupled together by means of any fixing system (glue, ultrasonic, double-sided adhesive, etc.).

The difficulty in processing this type of curtain at industrial level lies in the precision required in fixing the pleats together at the exact fold point in order to ensure that there are no irregularities in the fabric.

Besides already owning several industrial patents in the curtains and pleated insect screens industry and the Applicant in question is one of the most innovative companies for the manufacture of industrial machinery in the reference industry.

To date, there does not seem to be a machine capable of automatically coupling two or more fabrics to form a pleated curtain. Some industrial patents relate to pleated curtains, such as for example the Chinese patent CN108729834. It claims a pleated curtain capable of eliminating the loss of light generated by the through hole for the raising cord.

Another patent, a United States patent this time, published under the number US2014284005, claims a complex system of slidable carriages for the movement of pleated curtains in an easy way for the user.

EP0227247 whose title is "Method of making a honeycomb structure from joined single pleat material", describes a honeycomb structure formed of two continuous lengths of pleated material, secured together intermediate the pleats. In particular, this honeycomb structure is constructed of foldable material and defining a plurality of longitudinally extending front face and a longitudinally extending back face. The front faces of all the cells are defined by a first, single piece of foldable material. The back faces of all the cells are defined by a second, single piece of foldable material.

None of the patents briefly described above and not even the others known up to date, seem to claim a machine for the industrial production of similar coupled curtains.

### Description of the invention

According to the present invention, provided is a machine for coupling two pleated fabrics and, possibly, reinforcing them with stiffening slats, thus being able to obtain two types of fabrics starting from the same machine which effectively solves the problems outlined above. The machine for the production of coupled pleated fabrics of the present invention is suitable to produce, a coupled fabric or, as an alternative, a reinforced coupled fabric.

Said coupled fabric consists of a first fabric and a second fabric, both pleated, irreversibly engaged to each other at the fold points of said pleats.

Said reinforced coupled fabric consists of said first fabric and said second fabric, both pleated, irreversibly engaged to each other at the fold points of said pleats and a plurality of stiffening slats, engaged in some pleats of said first fabric.

A first fabric, also subject to the protection offered by the present patent, is obtained by the stable and irreversible engagement between a first pleated fabric and a second pleated fabric. Advantageously, engagement is achieved by gluing some pleats together at the respective fold points of the fabric.

If, starting from the aforementioned fabric, there are also rigid or semi-rigid stiffening slats, a reinforced pleated coupled fabric will be obtained.

The main advantage of the present invention lies in the fact that both the aforementioned fabrics can be obtained using the same machine.

It consists of a feed plane surface from which the first pleated fabric comes and a second feed surface plane from which the second pleated fabric comes.

The first pleated fabric is directed toward a first roller and the second pleated fabric is directed toward a second roller.

Said rollers both have a central motor which causes the rotation thereof and a toothed surface. More in detail, the teeth are shaped so as to engage with the pleats of the respective fabrics, improving the adherence thereof to the surface of the roller.

In an even more advantageous version, one or both of the rollers are connected to at least one vacuum pump which, by suctioning the air from the outer surface, increases the adherence of the pleated fabric on said roller.

The machine has a glue dispenser upstream of the second roller. Thus, a moment before the second fabric reaches the second roller some of its pleats are affected by the drop or spraying of glue. Preferably the glue will be positioned on the pleats equally spaced from each other. More precisely, the glue will not affect the entire surface of the pleating, but by the edge formed by the fold.

Thanks to the arrangement of the two rollers at the appropriate distance, the first fabric on the first roller and the second fabric on the second roller will enter into mutual contact precisely at the previously glued corners.

In an even more advantageous embodiment, the machine comprises a system for automatically adjusting the mutual distance of the two rollers according to the dimensions of the pleats of the two fabrics to be coupled.

Thus, the first type of fabric that can be manufactured by means of the machine in question is already ready at the exit from the two rollers. If this is the fabric to be manufactured, the coupled fabric exiting from the rollers will be advantageously conveyed on a first working plane surface. Here there is a glue drying area comprising drying means, preferably comprising an oven or a blowing device.

If reinforced coupled fabric is to be manufactured, the coupled fabric coming out of the rollers will be conveyed toward a second processing plane surface. A moment before reaching the latter, the coupled fabric traverses the action area of a robotic arm arranged downstream of a loader containing the rigid or semi-rigid stiffening slats, with which to reinforce the coupled fabric.

Thus, said robotic arm then positions, one by one, said stiffening slats at a plurality of mutually equally spaced pleats of said coupled fabric, making it a reinforced coupled fabric.

Thus, on the second processing plane surface the reinforced coupled fabric is conveyed and subjected to drying of the adhesive agent by means of an oven or a blowing device.

In a preferred embodiment of the machine subject of the invention, both the first and second processing plane surface also comprise a cutting area with cutting means, in which the coupled fabric or the reinforced coupled fabric are cut to the predetermined size, and a packaging area, with packaging means dedicated to inserting the finished product.

The advantages offered by the present invention are apparent in the light of the description set forth herein and will be further clarified by the accompanying figures and the detailed description thereof.

### Description of the figures

The invention will be described hereinafter in at least one preferred embodiment, provided by way of non-limiting example, with reference to the attached figures, wherein:

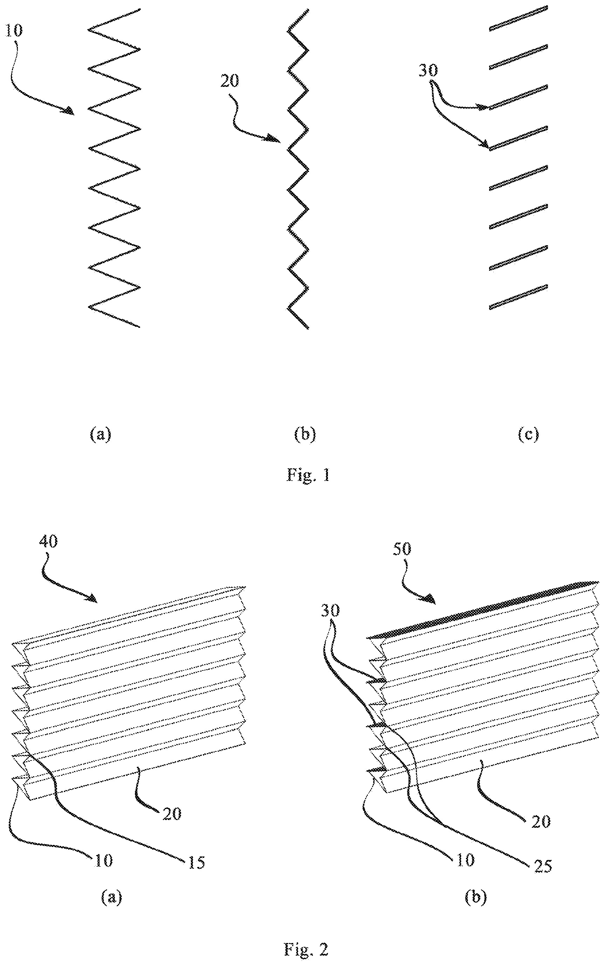

- FIGURE 1 shows the two types of fabric (a) and (b) and the stiffening slats 30 (c).
- FIGURE 2 shows the two possible products assembled by means of the machine in question, i.e. a coupled fabric 40 (a) and a reinforced coupled fabric 50 (b).
- FIGURE 3 shows the machine 100 subject of the present invention in one of its embodiments, considered to be the best one to date.

### Detailed description of the invention

Now, the present invention will be illustrated purely by way of non-limiting or non-binding example, with reference to the figures illustrating some embodiments regarding the present inventive concept.

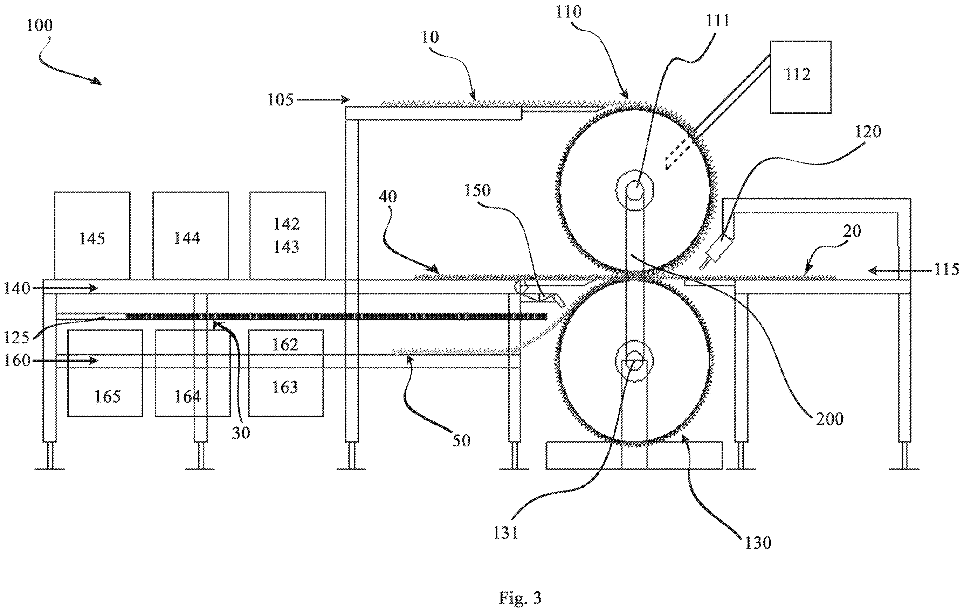

With reference to FIG. 3 the machine 100 of the present invention is shown in its preferred embodiment.

It comprises:
- A first feed plane surface 105 on which a first pleated fabric 10 is drawn in a direction toward a first roller 110;
- a second feed plane surface 115 on which a second pleated fabric 20 is drawn according to a direction opposite to the direction of said first fabric 10, toward a second roller 130;
- said pair of rollers 110-130 arranged with the first one on the 110 higher than the second roller 130. Said rollers 110-130 both consist of a central motor 111-131, which determines the rotation thereof at a predetermined speed. The outer surface 113-133 is of both rollers 110-130 and it has teeth which are sized as a function of the size of the pleats of the two fabrics 10-20. In particular, the first roller 110, having to turn overturn the first fabric 10 to make it come to contact with the second fabric 20, is connected to a suctioning pump 112 which makes the first fabric 10 adhere to the outer surface 113 of the first roller 110;
- an automatic system 200 for adjusting the mutual distance of the two rollers 110-130 according to the dimensions of the pleats of the two fabrics 10-20 to be coupled. In this manner it is possible to control the pressure force with which the two fabrics 10-20 are pressed against each other;
- a glue dispenser 120 arranged downstream of the second feed plane surface 115, by means of which a predetermined amount of glue is released at the pleats of the second fabric 20 that is intended to be irreversibly bound to the pleats of the first fabric 10.

The first coupled fabric 40 is made once the two fabrics 10-20 have been squeezed against each other by the two rollers 110-130.

It is then deposited on a first processing surface 140 in which an oven 142 dries the glue, a cutting area 144 with cutting means cuts it to the predetermined size and a packaging area 145 with packaging means packs it.

If a reinforced coupled fabric is to be manufactured 50, the coupled fabric 40 exiting from the rollers 110-130, are conveyed toward a second processing plane surface 160. In the path toward said second processing plane surface 160, a robotic arm 150 positions, one by one, stiffening slats 30 picked up by a suitable loader 125.

The second processing plane surface 160 is then equipped, similarly to the first processing plane surface 140, with an oven 162, a cutting area 164 with cutting means and a packaging area 165 with packaging means.

Lastly, it is clear that modifications, additions or variations may be applied to the invention described heretofore which are obvious to a person skilled in the art, without departing from the scope of protection provided by the appended claims.

## Claims

1. Machine (100) for the production of coupled pleated fabrics, suitable to produce, a coupled fabric (40) or, as an alternative, a reinforced coupled fabric (50), said coupled fabric (40) consisting of a first fabric (10) and a second fabric (20), both pleated, irreversibly engaged to each other at the fold points (15) of said pleats; said reinforced coupled fabric (50) consisting of said first fabric (10) and said second fabric (20), both pleated, irreversibly engaged to each other at the fold points (25) of said pleats and a plurality of stiffening slats (30), engaged in some pleats of said first fabric (10), said machine (100) being **characterised in that** it comprises at least:
- one first feed plane surface (105) of said first pleated fabric (10) towards a first roller (110);
- one second feed plane surface (115) of said second pleated fabric (20) towards a second roller (130);
- a feed loader (125) of said stiffening slats (30), arranged in the vicinity of said second roller (130), at the output direction of the fabric from said roller (130);
- said first roller (110) provided with a central motor (111) and with a toothed outer surface (113) so that the pleats of said first fabric (10) coincide with the teeth of said outer surface (113);
- a glue dispenser (120) arranged downstream of said second feed plane surface (115) of said second fabric (20), and, therefore, immediately upstream of said second roller (130); said glue dispenser (120) being suitable to release a predetermined amount of glue at the pleats of said second fabric (20) that is intended to be irreversibly bound to the pleats of said first fabric (10);
- said second roller (130) provided with a central motor (131) and a toothed outer surface (133) so that the pleats of said second fabric (20) coincide with the teeth of said outer surface (133); said second roller (130) being positioned below said first roller (110) at a distance such to determine the contact between the fold points (15) of said first fabric (10) and the fold points (25) of said second fabric (20) and the irreversible engagement of the pleats previously coated with glue by means of said dispenser (120);
- a first processing plane surface (140) on which the coupled fabric (40) is conveyed, produced by the union of said first fabric (10) and of said second fabric (20) by means of the pressure exerted by the two rollers (110- 130); said first processing plane surface (140) comprising at least one area with drying means, dedicated to the drying of the glue used for the bond between said two fabrics (10- 20);
- a second processing plane surface (160) on which the coupled fabric (40) in output from said rollers (110- 130) is conveyed in the case where a reinforced coupled fabric (50) is to be produced; said second processing plane surface (140) comprising at least a drying area with drying means dedicated to the drying of the glue responsible for the bond between said two fabrics (10- 20);
- a robotic arm (150), arranged upstream of said second processing plane surface (160) and downstream of said feed loader (125) of said stiffening slats (30); said robotic arm (150) being suitable to position, one by one, said stiffening slats (30) at a plurality of pleats, equally spaced from each other, of said coupled fabric (40), making it a reinforced coupled fabric (50).

2. Machine (100) for the production of coupled pleated fabrics, according to the preceding claim 1, **characterised in that** it comprises an automatic adjustment system (200) of the mutual distance of the two rollers (110- 130) depending on the size of the pleats of the two fabrics (10- 20) to be coupled.

3. Machine (100) for the production of coupled pleated fabrics, according to any one of the preceding claims 1 or 2, **characterised in that** said first roller (110) is connected to a suction pump (112) suitable to suck air from the outer surface (113) towards the centre of said roller (110) so as to improve the adhesion of said first pleated fabric (10) on said outer surface (113) of said first roller (110).

4. Machine (100) for the production of coupled pleated fabrics, according to any one of the preceding claims, **characterised in that** said second roller (130) is connected to a suction pump suitable to suck air from the outer surface (133) towards the centre of said roller (130) so as to improve the adhesion of said second pleated fabric (20) on said outer surface (133) of said second roller (130).

5. Machine (100) for the production of coupled pleated fabrics, according to any one of the preceding claims, **characterised in that** said drying means of said drying area of said first processing plane surface (140) comprises at least an oven (142) or, alternatively, a blowing device (143).

6. Machine (100) for the production of coupled pleated fabrics, according to any one of the preceding claims, **characterised in that** said drying means of said drying area of said second processing plane surface (160) comprises at least an oven (162) or, alternatively, a blowing device (163).

7. Machine (100) for the production of coupled pleated fabrics, according to any one of the preceding claims, **characterised in that** said first processing plane surface (140) comprises at least one cutting area (144) with cutting means dedicated to the cutting of said coupled fabric (40) of a predetermined measurement, followed by a packaging area (145) with packaging means dedicated to the packaging of the fabric (40) just created.

8. Machine (100) for the production of coupled pleated fabrics, according to any one of the preceding claims, **characterised in that** said second processing plane surface (160) comprises at least one cutting area (164) with cutting means dedicated to the cutting of said reinforced coupled fabric (50) of a predetermined measurement, followed by a packaging area (165) with packaging means dedicated to the packaging of the reinforced coupled fabric (50) just created.

## Patentansprüche

1. Maschine (100) zur Produktion gekoppelter gefalteter Gewebe, das geeignet ist, um ein gekoppeltes Gewebe (40) oder, als Alternative, ein verstärktes gekoppeltes Gewebe (50) herzustellen, wobei das gekoppelte Gewebe (40) aus einem ersten Gewebe (10) und einem zweiten Gewebe (20), die beide gefaltet sind und an den Faltpunkten (15) der Falten irreversibel ineinandergreifen, besteht; wobei das verstärkte gekoppelte Gewebe (50) aus dem ersten Gewebe (10) und dem zweiten Gewebe (20) besteht, die beide gefaltet sind und an den Faltpunkten (25) der Falten irreversibel ineinandergreifen, und mehreren Versteifungslamellen (30), die in einige Falten des ersten Gewebes (10) eingreifen, wobei die Maschine (100) **dadurch gekennzeichnet ist, dass** sie zumindest aufweist:
- eine erste Zuführungsebenenoberfläche (105) der des ersten gefalteten Gewebes (10) zu einer ersten Walze (110);
- eine zweite Zuführungsebenenoberfläche (115) des zweiten gefalteten Gewebes (20) zu einer zweiten Walze (130);
- einen Zuführungslader (125) der Versteifungslamellen (30), der in der Nähe der zweiten Walze (130) angeordnet ist, an der Ausgaberichtung des Gewebes von der Walze (130);
- wobei die erste Walze (110) mit einem zentralen Motor (111) und einer gezahnten äußeren Oberfläche (113) versehen ist, so dass die Falten des ersten Stoffes (10) mit den Zähnen der äußeren Oberfläche (113) zusammenfallen;
- einen Klebstoffspender (120), der stromabwärts der zweiten Zuführungsebenenoberfläche (115) des zweiten Gewebes (20) und somit unmittelbar stromaufwärts der zweiten Walze (130) angeordnet ist; wobei der Klebstoffspender (120) geeignet ist, eine vorgegebene Menge an Klebstoff an den Falten des zweiten Gewebes (20), das irreversibel an die Falten des ersten Gewebes (10) befestigt werden soll, freizusetzen;
- wobei die zweite Walze (130) mit einem zentralen Motor (131) und einer gezahnten äußeren Oberfläche (133) versehen ist, so dass die Falten des zweiten Gewebes (20) mit den Zähnen der äußeren Oberfläche (133) zusammenfallen; wobei die zweite Walze (130) unter der ersten Walze (110) in einem Abstand derart positioniert ist, dass sie den Kontakt zwischen den Faltpunkten (15) des ersten Gewebes (10) und den Faltpunkten (25) des zweiten Gewebes (20) und das irreversible Eingreifen der zuvor mittels des Spenders (120) mit Klebstoff beschichteten Falten bestimmt;
- eine erste Bearbeitungsebenenoberfläche (140), auf der das gekoppelte Gewebe (40) befördert wird, durch die Verbindung des ersten Gewebes (10) und des zweiten Gewebes (20) mittels des durch die beiden Walzen (110-130) ausgeübten Drucks erzeugt wird; wobei die erste ebene Bearbeitungsebenenoberfläche (140) zumindest einen Bereich mit Trocknungsmitteln aufweist, die zum Trocknen des Klebstoffs, der für die Verbindung zwischen den beiden Gewebe (10-20) verwendet wird, bestimmt sind;
- eine zweite Bearbeitungsebenenoberfläche (160), auf die das gekoppelte Gewebe (40) am Ausgang von den Walzen (110-130) in einem Fall befördert wird, in dem ein verstärktes gekoppeltes Gewebe (50) hergestellt werden soll; wobei die zweite Bearbeitungsebenenoberfläche (140) zumindest einen Trocknungsbereich mit Trocknungsmitteln, die zum Trocknen des für die Verbindung zwischen den beiden Geweben (10-20) verantwortlichen Klebstoffs bestimmt sind, aufweist;
- einen Roboterarm (150), der stromaufwärts der zweiten Bearbeitungsebenenoberfläche (160) und stromabwärts des Zuführungsladers (125) der Versteifungslamellen (30) angeordnet ist; wobei der Roboterarm (150) geeignet ist, die Versteifungslamellen (30) eine nach der anderen an mehreren gleichmäßig voneinander beabstandeten Falten des gekoppelten Gewebes (40) zu positionieren, wodurch dieses zu einem verstärkten gekoppelten Gewebe (50) wird.

2. Maschine (100) zur Produktion gekoppelter gefalteter Gewebe nach dem vorhergehenden Anspruch 1, **dadurch gekennzeichnet, dass** sie ein automatisches Einstellsystem (200) für den gegenseitigen Abstand der beiden Walzen (110-130) in Abhängigkeit von der Größe der Falten der beiden zu koppelnden Gewebe (10-20) aufweist.

3. Maschine (100) zur Produktion gekoppelter gefalteter Gewebe nach einem der vorhergehenden Ansprüche 1 oder 2, **dadurch gekennzeichnet, dass** die erste Walze (110) mit einer Saugpumpe (112) verbunden ist, die geeignet ist, Luft von der äußeren Oberfläche (113) zur Mitte der Walze (110) hin anzusaugen, um die Haftung des ersten gefalteten Stoffes (10) auf der äußeren Oberfläche (113) der ersten Walze (110) zu verbessern.

4. Maschine (100) zur Produktion gekoppelter gefalteter Gewebe nach einem der vorhergehenden Ansprüche, **dadurch gekennzeichnet, dass** die zweite Walze (130) mit einer Saugpumpe verbunden ist, die geeignet ist, Luft von der äußeren Oberfläche (133) zur Mitte der Walze (130) hin anzusaugen, um die Haftung des zweiten gefalteten Stoffes (20) auf der äußeren Oberfläche (133) der zweiten Walze (130) zu verbessern.

5. Maschine (100) zur Produktion gekoppelter gefalteter Gewebe nach einem der vorhergehenden Ansprüche, **dadurch gekennzeichnet, dass** das Trocknungsmittel des Trocknungsbereichs der ersten Bearbeitungsebenenoberfläche (140) zumindest einen Ofen (142) oder alternativ eine Blaseinrichtung (143) aufweist.

6. Maschine (100) zur Produktion gekoppelter gefalteter Gewebe nach einem der vorhergehenden Ansprüche, **dadurch gekennzeichnet, dass** das Trocknungsmittel des Trocknungsbereichs der zweiten Bearbeitungsebenenoberfläche (160) zumindest einen Ofen (162) oder alternativ eine Blaseinrichtung (163) aufweist.

7. Maschine (100) zur Produktion gekoppelter gefalteter Gewebe nach einem der vorhergehenden Ansprüche, **dadurch gekennzeichnet, dass** die erste Bearbeitungsebenenoberfläche (140) zumindest einen Schneidebereich (144) mit Schneidemitteln aufweist, die zum Schneiden des gekoppelten Gewebes (40) mit einem vorgegebenen Maß bestimmt sind, gefolgt von einem Verpackungsbereich (145) mit Verpackungsmitteln, die zum Verpacken des soeben hergestellten Gewebes (40) bestimmt sind.

8. Maschine (100) zur Produktion gekoppelter gefalteter Gewebe nach einem der vorhergehenden Ansprüche, **dadurch gekennzeichnet, dass** die zweite Bearbeitungsebenenoberfläche (160) zumindest einen Schneidbereich (164) mit Schneidmitteln aufweist, die zum Schneiden des verstärkten gekoppelten Stoffes (50) mit einem vorgegebenen Maß bestimmt sind, gefolgt von einem Verpackungsbereich (165) mit Verpackungsmitteln, die zum Verpacken des soeben hergestellten verstärkten gekoppelten Stoffes (50) bestimmt sind.

## Revendications

1. Machine (100) pour la production de tissus plissés couplés, appropriée pour produire un tissu couplé (40) ou, à titre de variante, un tissu couplé renforcé (50), ledit tissu couplé (40) consistant en un premier tissu (10) et un deuxième tissu (20), tous les deux plissés, irréversiblement engagés l'un avec l'autre sur les points de pliage (15) desdits plis ; ledit tissu couplé renforcé (50) consistant en ledit premier tissu (10) et ledit deuxième tissu (20), tous les deux plissés, irréversiblement engagés l'un avec l'autre sur les points de pliage (25) desdits plis et une pluralité de lames de raidissement (30), engagées dans quelques-uns des plis dudit premier tissu (10), ladite machine (100) étant **caractérisée en ce qu'**elle comprend au moins :
- une première surface plane d'amenée (105) dudit premier tissu plissé (10) vers un premier rouleau (110) ;
- une deuxième surface plane d'amenée (115) dudit deuxième tissu plissé (20) vers un deuxième rouleau (130) ;
- un chargeur d'amenée (125) desdites lames de raidissement (30), disposées à proximité dudit deuxième rouleau (130), dans la direction de sortie du tissu dudit rouleau (130) ;
- ledit premier rouleau (110) pourvu d'un moteur central (111) et d'une surface extérieure dentée (113) de sorte que les plis dudit premier tissu (10) coïncident avec les dents de ladite surface extérieure (113) ;
- un distributeur de colle (120) disposé en aval de ladite deuxième surface plane d'amenée (115) dudit deuxième tissu (20), et, par conséquent, immédiatement en amont dudit deuxième rouleau (130) ; ledit distributeur de colle (120) étant apte à libérer une quantité prédéterminée de colle sur les plis dudit deuxième tissu (20) qui est destiné à être lié irréversiblement aux plis dudit premier tissu (10) ;
- ledit deuxième rouleau (130) pourvu d'un moteur central (131) et d'une surface extérieure dentée (133) de sorte que les plis dudit deuxième tissu (20) coïncident avec les dents de ladite surface extérieure (133) ; ledit deuxième rouleau (130) étant positionné au-dessous dudit premier rouleau (110) à une distance propre à déterminer le contact entre les points de pliage (15) dudit premier tissu (10) et les points de pliage (25) dudit deuxième tissu (20) et l'engagement irréversible des plis enduits précédemment de colle à l'aide dudit distributeur (120) ;
- une première surface plane de traitement (140) sur laquelle le tissu couplé (40) est acheminé, produit par l'union dudit premier tissu (10) et dudit deuxième tissu (20) à l'aide de la pression exercée par les deux rouleaux (110-130) ; ladite première surface plane de traitement (140) comprenant au moins une zone avec des moyens de séchage, destinés au séchage de la colle utilisée pour la liaison entre lesdits deux tissus (10-20) ;
- une deuxième surface plane de traitement (160) sur laquelle le tissu couplé (40), à la sortie desdits rouleaux (110-130), est acheminé dans le cas où un tissu couplé renforcé (50) doit être produit ; ladite deuxième surface plane de traitement (140) comprenant au moins une zone de séchage avec des moyens de séchage destinés au séchage de la colle responsable de la liaison entre lesdits deux tissus (10-20) ;
- un bras de robot (150), disposé en amont de ladite deuxième surface plane de traitement (160) et en aval dudit chargeur d'amenée (125) desdites lames de raidissement (30) ; ledit bras de robot (150) étant apte à positionner, une par une, lesdites lames de raidissement (30) à une pluralité de plis, espacés à égale distance les uns des autres, dudit tissu couplé (40), ce qui en fait un tissu couplé renforcé (50).

2. Machine (100) pour la production de tissus plissés couplés, selon la revendication 1 précédente, **caractérisée en ce qu'**elle comprend un système d'ajustement automatique (200) de la distance mutuelle des deux rouleaux (110-130) en fonction de la taille des plis des deux tissus (10-20) à coupler.

3. Machine (100) pour la production de tissus plissés couplés, selon l'une quelconque des revendications 1 ou 2 précédentes, **caractérisée en ce que** ledit premier rouleau (110) est relié à une pompe d'aspiration (112) apte à aspirer de l'air de la surface extérieure (113) vers le centre dudit rouleau (110) de manière à améliorer l'adhésion dudit premier tissu plissé (10) sur ladite surface extérieure (113) dudit premier rouleau (110).

4. Machine (100) pour la production de tissus plissés couplés, selon l'une quelconque des revendications précédentes, **caractérisée en ce que** ledit deuxième rouleau (130) est relié à une pompe d'aspiration apte à aspirer de l'air de la surface extérieure (133) vers le centre dudit rouleau (130) de manière à améliorer l'adhésion dudit deuxième tissu plissé (20) sur ladite surface extérieure (133) dudit deuxième rouleau (130).

5. Machine (100) pour la production de tissus plissés couplés, selon l'une quelconque des revendications précédentes, **caractérisée en ce que** lesdits moyens de séchage de ladite zone de séchage de ladite première surface plane de traitement (140) comprennent au moins une étuve (142) ou, à titre de variante, un dispositif de soufflage (143).

6. Machine (100) pour la production de tissus plissés couplés, selon l'une quelconque des revendications précédentes, **caractérisée en ce que** lesdits moyens de séchage de ladite zone de séchage de ladite deuxième surface plane de traitement (160) comprennent au moins une étuve (162) ou, à titre de variante, un dispositif de soufflage (163).

7. Machine (100) pour la production de tissus plissés couplés, selon l'une quelconque des revendications précédentes, **caractérisée en ce que** ladite première surface plane de traitement (140) comprend au moins une zone de coupe (144) avec des moyens de coupe destinés à la coupe dudit tissu couplé (40) d'une mesure prédéterminée, suivie d'une zone d'emballage (145) avec des moyens d'emballage destinés à l'emballage du tissu (40) qui vient d'être créé.

8. Machine (100) pour la production de tissus plissés couplés, selon l'une quelconque des revendications précédentes, **caractérisée en ce que** ladite deuxième surface plane de traitement (160) comprend au moins une zone de coupe (164) avec des moyens de coupe destinés à la coupe dudit tissu couplé renforcé (50) d'une mesure prédéterminée, suivie d'une zone d'emballage (165) avec des moyens d'emballage destinés à l'emballage du tissu couplé renforcé (50) qui vient d'être créé.
